(19) Europäisches Patentamt
European Patent Office
Office européen des brevets

(11) **EP 3 141 305 A1**

(12) **EUROPEAN PATENT APPLICATION**

(43) Date of publication:
**15.03.2017 Bulletin 2017/11**

(51) Int Cl.:
*B06B 1/10* *(2006.01)*  *G01H 1/14* *(2006.01)*
*G01H 13/00* *(2006.01)*  *G01M 7/02* *(2006.01)*
*G01N 29/12* *(2006.01)*  *G01N 3/34* *(2006.01)*

(21) Application number: **16187706.3**

(22) Date of filing: **07.09.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **08.09.2015 IT UB20153476**

(71) Applicant: **Universita Degli Studi di Trieste 34127 Trieste (IT)**

(72) Inventor: **Caniato, Marco 31015 Conegliano (TV) (IT)**

(74) Representative: **Petraz, Gilberto Luigi et al GLP S.r.l. Viale Europa Unita, 171 33100 Udine (IT)**

(54) **EXPERIMENTAL METHOD TO DETECT THE ELASTIC MODULUS OF OBJECTS, SAMPLES OR SEMI-WORKED PRODUCTS OF VARIOUS MATERIALS**

(57) Experimental method to detect the elastic modulus (E) of objects, samples, or semi-worked products, comprising the step of imparting a mechanical stress to the sample object (100) by means of an impact generated by a beating element (2) with respect to an inertial body (3); introducing an exciting body (5) of predetermined mass (m) between the beating element (2) and the sample object (100) so that the exciting body (5) is disposed in contact with the sample object (100) in correspondence with a contact surface (5a) having a predetermined extension value (S); imparting the mechanical stress on the sample object (100) by impacting the beating element (2) on the exciting body (5); acquiring a response signal corresponding to an elongation variation ($\Delta X$) of the sample object (100); processing a value of the elastic modulus (E) of the sample object (100) as a function at least of the extension value (S) of the contact surface (5a) and the value of an elongation variation ($\Delta X$) of the sample object (100).

Fig.1

**Description**

FIELD OF THE INVENTION

Embodiments described here concern an experimental method to detect the elastic modulus "E" of objects, samples or semi-worked products of various materials.

In particular, embodiments described here concern an experimental method to detect the elastic modulus "E" of objects such as, for example, consolidated polymers or metal materials or other types of material used in the industrial field in general. In other words, embodiments described here concern an experimental method to detect the elastic modulus "E" of a sample object that is used in the building/mechanical/industrial field in general (therefore objects made of concrete materials, composite fibers, plastic, metals and suchlike).

Furthermore, embodiments described here concern an experimental detection method configured to supply an indicator of the structural integrity of an object, since the method according to the present description is configured to perform a test of the non-destructive type on a sample object.

By way of example, the present description can be used in the building trade to perform a method that allows to control the structural integrity and/or to determine the presence of defects in a sample object made of a specific material. In particular, in the building trade, the method according to the present description allows to define quantitatively the resilient characteristics of the materials used as acoustic insulators, such as for example but not only, the elastic modulus "E" of a sample object made of a predetermined material. Embodiments concern a method to detect the mechanical characteristics of a sample object that is extremely versatile in use, extremely accurate and repeatable, advantageously allowing to perform an instantaneous detection of the characteristics and mechanical integrity of a sample object.

BACKGROUND OF THE INVENTION

Nowadays it is fundamental to have a final validation of a product/material so as to be able to guarantee that it has all the predetermined physical/chemical/ mechanical characteristics. It is known that the final validation can be obtained by different control tests carried out with respective detecting devices, each one characterized by the basic physical functioning principle.

In the current state of the art detection methods are known that allow to carry out a control of the destructive type or the non-destructive type.

Detection methods configured for the destructive control generally have a functioning principle of the mechanical and/or thermal type. Therefore, destructive control tests are the mechanical and/or thermal type and provide mechanical and/or thermal stresses on the sample product. Detection methods for destructive control are discreetly sophisticated and require controlled equipment, spaces and environments to guarantee at least the repeatability of the method. Control methods of the mechanical and/or thermal type provide to make samples of the material to be tested (called test pieces) which generally are disposable samples because they are stressed during the test to such a point that their physical/chemical/mechanical characteristics are altered and they therefore cannot be used afterward. In the current state of the art, detection methods are known, configured to detect anomalies directly on samples that are structural elements with predetermined shape and sizes because they are semi-worked products inserted into the overall structure, for example, of a motorway bridge or in the structure of an airplane.

In the current state of the art, detection methods are also known, configured for non-destructive control, which generally have a "non-invasive" functioning principle, such as for example ultrasounds, X rays or other similar techniques. Therefore, non-destructive control methods can be carried out by rather complex devices, generally expensive and which require suitably equipped specialized laboratories.

By way of example, document WO9119173A1 concerns a method and a system for the non-destructive evaluation of the structural integrity of a mechanical product made of composite fibers. The method according to this document is intended in particular to evaluate the rigidity, resistance and damping characteristics of a composite structure.

Other detection methods for non-destructive tests can be cited, as well as those cited above, such as for example detection methods with a magnetic particle system, detection methods with a system with induced currents or detection methods with a vibrational type system.

By way of example, document US 5533399A concerns a non-destructive mechanical method to determine the elastic properties of a structural material by means of an impulse imparted by a hammer equipped with a force transducer of the piezoelectric type to a slab-like sample in turn equipped with a miniaturized piezoelectric sensor.

In general, if it is necessary to control a product/material made in a highly industrialized production line, the quality testing techniques must be integrated as much as possible with the production line itself, emphasizing even more the basic characteristics of speed, precision and reliability. To this purpose, detection methods and devices have been created that use specific techniques for the rapid and non-destructive analysis of samples to be made directly along the production line. Among these known techniques there is the acoustic technique which, compared with others, is most suitable for determining the quality characteristics of the product/material under in line production conditions. Generally, the acoustic test on an object allows to identify the type and position of the defect on the product/material by analyzing (usually using the FFT technique) the acoustic responses recorded. A particular variant of the acoustic testing technique provides to analyze the modal components on finished metal products to be compared with that of a standard reference test piece, substantially a comparative acoustic test technique.

By way of example, document EP371631A2 shows an analysis method and the corresponding apparatus to carry out a qualitative analysis on structural elements stressed by transitory structural loads.

Having said this, known detection methods for carrying out destructive and non-destructive controls all suffer from some limitations in use and other counterindications that often make them difficult to apply and in any case give a test result that is not very reliable.

In particular, destructive control methods of the mechanical and thermal type require a step of preparing the test pieces according to legal requirements that lay down their shape and sizes. Furthermore, as we said, the test pieces made are dedicated only to the single control test session, as they cannot be re-used in any other way. In addition, detection methods for thermal type controls function for a long time due to the long duration of the tests, which can even last several hours. In particular, detection methods of the mechanical type require a long preparation of the samples and it is often necessary to sacrifice artefacts from which the test pieces are made, or special test pieces have to be made. In other words, detection methods of the mechanical destructive type are not very adaptable or flexible in use, and thus entail considerable costs and a long time to make the test pieces and to carry out the test itself. These aspects of costs and production times for the test pieces are also caused by the obligatory legal requirements that lay down precisely the shape and sizes of the samples.

With regard to detection methods for carrying out non-destructive controls, they also suffer from some limitations which sometimes prevent them from being used and/or affect their effectiveness. In particular, as we mentioned above, known detection methods for non-destructive control are rather costly and require costly equipment, equipped spaces, well isolated from the rest of the production space (such as for example a separate laboratory from the production department) and above all require highly qualified and expert staff.

Moreover, detection methods using non-destructive controls can be used on some materials but not on others. In fact, detection methods for non-destructive control can entail using conductive/magnetic materials which, in practice, make the test based on this specific technique not applicable to certain categories of materials, such as materials with a polymer base for example.

Another example of the limitations of detection methods using acoustic type control is that they are not suitable to be used in an industrial plant where the background noise of the working can interfere with the signal and with data processing, distorting the final results.

As we have already mentioned, detection methods using non-destructive control often have the problem that they emit potentially dangerous emissions, or dangerous for the worker responsible, such as for example X rays, ionizing emissions, ultrasounds, carcinogenic emissions. It is also acknowledged that the residues of special materials or substances (like radioactive ones) produced following non-destructive detection methods of the known type must be disposed of adequately.

Document CN-B-1026360565 concerns an apparatus and respective method for the dynamic determination of the elastic modulus of concrete test pieces as a function of the acquisition time and/or acquisition period.

The apparatus provides to register a response signal associated with a vibration of a test piece installed on a measuring station. In particular, the measuring station comprises a layer made of PVC on which a hammer member can act, having a layer of rubber and a load cell to stress the test piece. The response signal after stress imparted by the hammer member on the test piece can be perceived by an accelerometer disposed on the upper PVC layer. The apparatus described here comprises an analysis system configured to register the response signal and possibly to process it using a computer.

Document US-A-2003/037619 concerns an apparatus and respective method to determine the physical characteristics of a test piece made of a determinate material. The apparatus described here comprises a frame having its own known vibration frequency, different from that of the test piece to be tested. The apparatus also comprises attachment means suitable to attach the test piece in one point, stress means configured to trigger a vibration of the test piece at its own vibration frequency, detection means configured to detect the amplitude of the vibration of the test piece in question. The detection means are disposed in communication/connection with means to measure the time to acquire and supply an ordered chronological sequence of the acquisitions and the vibrational mode of the test piece.

Document US-A-2011/030481 concerns a device and respective method to verify the behavior under load of semi-worked products, particularly of wood, and possibly to determine the elastic modulus thereof. The device described here comprises first feed means disposed in correspondence with a first segment of the path that a board of wood travels along the device, means to deform the board of wood and second feed means disposed in correspondence with a second segment of the path. The second feed means are disposed upstream of the first feed means and at a predetermined distance such as to affect the same board of wood simultaneously in two different positions as it advances in the device. The deformation means also comprise the first and second feed means, so as to apply a longitudinal traction force along the board to carry out a load test on the board.

Document US-A-5804707 concerns a device to determine the dynamic hardness of a test piece using a system configured to impart an impulsive force to the test piece. The device comprises a system to register a response signal arriving from the material of the test piece. In particular, the test piece tested concerns sports equipment of various types.

Document US-A-2008/255806 concerns a kit device for monitoring pylons or wooden poles, in particular for monitoring pylons or wooden poles used for telephone lines. In particular, the kit comprises a sort of collar equipped with detection sensors able to determine the response due to a percussion imparted by a percussion device on the wooden pole which is to be controlled. The kit is completed by a data transmission system and a portable computer configured to receive, process and determine the degree of damage/deterioration of the wooden pole.

There is therefore the need to perfect an experimental method to detect the elastic modulus "E" of objects, samples or semi-worked products of various materials that can overcome at least one of the disadvantages of the state of the art.

In this context, the technical aim on which the description is based is to propose an experimental method to detect the elastic modulus "E" of objects, samples or semi-worked products of various materials that overcomes the disadvantages and limitations of the state of the art as described above.

In particular, one purpose according to the present description is to make available an experimental method to detect the elastic modulus "E" of a sample object which allows to perform a non-destructive control without invalidating in any way the sample object tested.

Another purpose according to the present description is to make available an experimental method to detect the elastic modulus "E" of a sample object which is adaptable to production requirements in the industrial field, that is, which is flexible in use and can therefore be carried out directly along a production line.

Another and different purpose according to the present description is to make available an experimental method to detect the elastic modulus and/or the structural integrity of a sample object that allows to carry out the control without producing potentially dangerous emissions for the user, such as for example X rays, ultrasounds, ionizing or carcinogenic emissions in general.

In addition, another purpose according to the present description is to make available an experimental method to detect the elastic modulus "E" and/or the structural integrity of a sample object that allows to carry out the control totally automatically and without needing specialized laboratories or manpower.

The Applicant has devised, tested and embodied the present invention to overcome the shortcomings of the state of the art and to obtain these and other purposes and advantages.

Other limitations and disadvantages of conventional solutions and technologies will be clear to a person of skill after reading the remaining part of the present description with reference to the drawings and the description of the embodiments that follow, although it is clear that the description of the state of the art connected to the present description must not be considered an admission that what is described here is already known from the state of the prior art.

SUMMARY OF THE INVENTION

The present invention is set forth and characterized in the independent claim.

In particular, the technical task and the specified purposes are substantially obtained by an experimental method to detect the elastic modulus "E" of a sample object comprising the technical characteristics set forth in one or more of the attached claims.

The dependent claims describe other characteristics of the invention or variants to the main inventive idea.

According to some embodiments, an experimental method is provided to detect the elastic modulus of objects, samples or semi-worked products of various materials. According to one embodiment, the method comprises the steps of imparting a mechanical stress to the sample object by an impact generated by a beating element with respect to an inertial body. The method also comprises the steps of:

- introducing an exciting body with a predetermined mass between the beating element and the sample object so that the exciting body is disposed in direct contact with the sample object in correspondence with a contact surface having a predetermined extension value, achieving a mass-spring system supported by the inertial body, wherein the mass is represented by the exciting body and the spring is represented by the sample object;
- imparting the mechanical stress to the sample object by impacting the beating element on the exciting body disposed in direct contact on the sample object, so that the mechanical stress is transferred directly from the exciting body to the sample object;
- acquiring a response signal corresponding to a resonance frequency value of the sample object;
- processing a value of the elastic modulus of the sample object as a function at least of the extension value of the contact surface and the resonance frequency value of the sample object.

According to a possible variant, the detection method comprises:

- arranging a sample object of the material having a predetermined size and a known mass value;
- providing acquisition means configured to acquire a response signal from the sample object in an operative configuration of detecting the elastic modulus of the sample object;
- arranging the sample object in contact with a support surface of the inertial body, preferably by arranging the sample object in contact with the acquisition means and above the support surface of the inertial body;

- arranging the exciting body with predetermined mass and exhibiting the contact surface having a predetermined extension value;
- arranging the exciting body in contact with the sample object in correspondence with the contact surface;
- arranging a beating element operatively associated with a detection device and configured to impart a mechanical stress to the sample object in an operative configuration of detecting the elastic modulus of the sample object;
- imparting a mechanical stress to the sample object by impacting the beating element on the exciting body and acquiring the response signal through the acquisition means;
- processing a resonance frequency value of the sample object;
- processing a value of the elastic modulus of the sample object by means of the detection device configured to process the extension value of the contact surface and the resonance frequency value of the sample object.

According to another possible variant, the exciting body and/or the inertial body are made in the form and/or of a material of infinite rigidity with respect to a rigidity of the sample object.

According to a variant, the detection method comprises vertically stacking the inertial body, the sample object and the exciting body, wherein the inertial body is arranged below the sample object, the sample object is disposed above the inertial body on the support surface and the exciting body is disposed above and in contact with the sample object by means of the contact surface.

According to other possible variant embodiments, the method comprises:

- positioning the sample object in contact with the exciting body and the inertial body, preferably arranging the sample object in contact with and disposed between the contact surface of the exciting body and the support surface of the inertial body;
- detecting a value of initial elongation of the sample object before imparting the mechanical stress to the sample object.

According to other possible embodiments, the method that provides to process a value of the elastic modulus of the sample object is preceded by the steps shown below:

- processing a first value of the ratio of a force value of the mechanical stress with the extension value of the contact surface;

- processing a second ratio value of a value of an elongation variation of the sample object with an initial elongation value of the sample object;
- processing the value of the elastic modulus of the sample object by calculating a value of the ratio of the first ratio value with the second ratio value.

According to other possible embodiments, the method comprises the verification of a rigidity value of the inertial body that is much greater than a rigidity value of the sample object, preferably predisposing the inertial body in a mineral material selected from marble, granite and/or other materials having a high density at least in the ratio 3:1 with respect to a density of the constituent material of the sample object.

In other possible variant embodiments, the method comprises operatively associating the acquisition means with the sample object, preferably by associating the acquisition means with the sample object and with the support surface of the inertial body.

Other possible embodiments of the method provide to arrange the acquisition means between the sample object and the support surface of the inertial body, preferably by arranging a plurality of transducers comprised of the acquisition means in accordance with a grid having a predetermined number of rows and columns and wherein one transducer can be positioned at least at a point of intersection between a row and a column of the grid.

Still other possible embodiments of the method provide to arrange the acquisition means between the sample object and the support surface of the inertial body, preferably by arranging a plurality of transducers comprised of the acquisition means according to a reference system with Cartesian coordinates, or a reference system with polar coordinates or a reference system with logarithmic axes and wherein one transducer can be positioned at least at a point of intersection of the coordinates.

According to other possible variant embodiments, the method comprises equipping the acquisition means with a multi-channel acquisition card, connectable to at least one transducer to acquire the response signal, the response signal preferably containing at least one resonance frequency of the sample object in an operative configuration of detecting the elastic modulus of the sample object.

These and other aspects, characteristics and advantages of the present disclosure will be better understood with reference to the following description, drawings and attached claims. The drawings, which are integrated and form part of the present description, show some embodiments of the present invention, and together with the description, are intended to describe the principles of the disclosure.

The various aspects and characteristics described in the present description can be applied individually where possible. These individual aspects, for example aspects and characteristics described in the attached dependent claims, can be the object of divisional applications.

It is understood that any aspect or characteristic that is discovered, during the patenting process, to be already known, shall not be claimed and shall be the object of a disclaimer.

BRIEF DESCRIPTION OF THE DRAWINGS

Other characteristics and advantages of the present description will become clearer from the indicative description, and therefore not restrictive, of a preferred but not exclusive embodiment of an experimental method to detect the elastic modulus "E" and/or the structural integrity of a sample object as described using the attached drawings wherein:

- fig. 1 shows a schematic example of a detection device corresponding to the detection method according to some embodiments described here;
- fig. 2 shows schematically a physical model of the mass-spring type which reproduces an operative configuration of the device in fig. 1 according to the method in embodiments described here;
- fig. 3 shows schematically a part of the device in fig. 1 without some parts, to make those otherwise hidden more visible;
- fig. 4a shows schematically the frequency trend of a response signal obtained by the method according to some embodiments described here;
- fig. 4b shows schematically the frequency trend of a different response signal obtained by the method according to some embodiments described here.

To facilitate comprehension, the same reference numbers have been used, where possible, to identify identical common elements in the drawings. It is understood that elements and characteristics of one embodiment can conveniently be incorporated into other embodiments without further clarifications.

DETAILED DESCRIPTION OF SOME EMBODIMENTS

We shall now refer in detail to the various embodiments of the present invention, of which one or more examples are shown in the attached drawing. Each example is supplied by way of illustration of the invention and shall not be understood as a limitation thereof. For example, the characteristics shown or described insomuch as they are part of one embodiment can be adopted on, or in association with, other embodiments to produce another embodiment. It is understood that the present invention shall include all such modifications and variants.

Before describing these embodiments, we must also clarify that the present description is not limited in its application to details of the construction and disposition of the components as described in the following description using the attached drawings. The present description can provide other embodiments and can be obtained or executed in various other ways. We must also clarify that the phraseology and terminology used here is for the purposes of description only, and cannot be considered as limitative.

Unless otherwise defined, all the technical and scientific terms used here and hereafter have the same meaning as commonly understood by a person with ordinary experience in the field of the art to which the present invention belongs. Even if methods and materials similar or equivalent to those described here can be used in practice and in the trials of the present invention, the methods and materials are described hereafter as an example. In the event of conflict, the present application shall prevail, including its definitions. The materials, methods and examples have a purely illustrative purpose and shall not be understood restrictively.

The present detection method allows to perform a control test to experimentally detect the elastic modulus "E" of objects, such as, for example, consolidated polymers or metal materials or other types of material used in the industrial field in general. Moreover, as already indicated above, embodiments described here concern an experimental detection method configured to supply an indicator of the structural integrity of an object, by performing a test of the non-destructive type on a sample object. Preferably, the method according to the present description is applicable on sample objects having both an isotropic and an anisotropic structure.

In particular, the portion of material to be subjected to the test will be called sample object with the reference number 100.

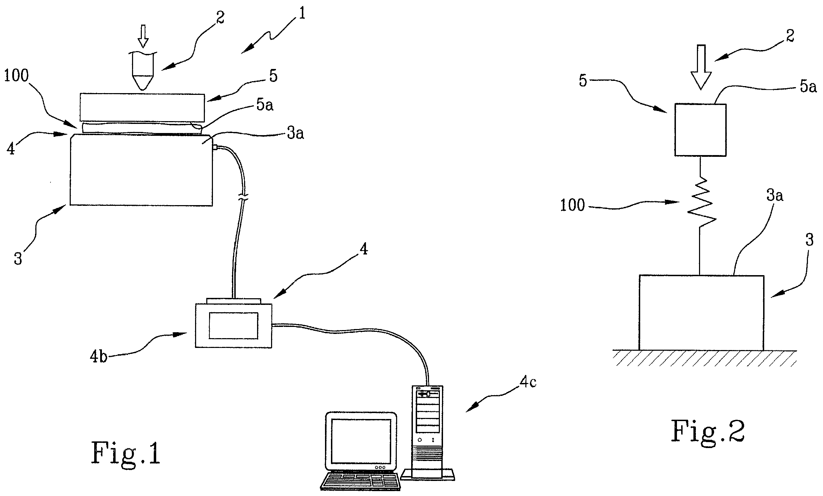

With reference to fig. 1, a device to detect the structural integrity of a sample object is also shown by way of example, indicated by the reference number 1, which allows to perform the method according to the present description.

The experimental method to detect the elastic modulus "E" of objects, samples or semi-worked products made of various materials according to the present description comprises the step of imparting a mechanical stress to the sample object 100 by means of an impact generated by a beating element 2 with respect to an inertial body 3. The experimental method to detect the elastic modulus "E" of the sample object 100 provides to dispose the inertial body 3 of the detection device 1 before imparting the mechanical stress on the sample object 100.

In fact, the beating element 2 is configured to impart a mechanical stress of the impulsive type at least on the sample object 100, having a force value equal to "F" when it is disposed on an inertial object whose physical and mechanical characteristics are known.

Preferably, the method comprises a sub-step of connecting the beating element 2 electrically, to allow to detect the force "F" of the mechanical stress imparted by the beating element 2 on the sample object 100, for example to feed a force transducer or an accelerometer.

Furthermore, the inertial body 3 is configured to support at least the sample object 100 and to contrast rigidly the mechanical stress imparted on the sample object 100 while the detection test is being performed.

Preferably, the method provides a sub-step of verifying that the inertial body 3 has a much greater rigidity than a rigidity value of the sample object 100. By way of non-restrictive example, a possible embodiment can consist of making the inertial body 3 of a mineral material selected from marble, granite and/or other materials with high density at least in a ratio of 3:1 with respect to a density of the constituent material of the sample object 100.

The detection device 1, shown in fig. 1, by way of non-restrictive example, also comprises acquisition means 4, configured to monitor a response signal arriving from at least the sample object 100 during the control test.

The experimental detection method provides to associate operatively the acquisition means 4 to the sample object 100, that is, applying the sample object 100 or putting it in contact with the acquisition means 4. Preferably, the detection method provides to dispose the acquisition means 4 between the sample object 100 and a support surface 3 a of the inertial body 3, as shown by way of example in fig. 1.

In particular, the acquisition means 4 comprise at least a transducer 4a, to be put in contact with the sample object 100 during the execution of the detection method. Preferably, the acquisition means 4 comprise a plurality of transducers 4a to be put in contact with the sample object 100 during the execution of the detection method.

According to one version of the method according to the present description, a sub-step is provided of disposing at least one transducer 4a along a grid having a predetermined number of lines and columns and in which at least in one point of their intersection a transducer 4a can be positioned.

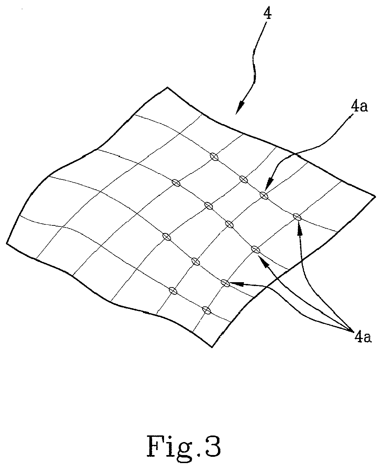

According to one version of the method according to the present description, a sub-step is provided, shown by way of example in fig. 3, of disposing the transducers 4a along a grid having a predetermined number of lines and columns and in which, preferably, at every point of intersection between a line and a column of the grid, a transducer 4a can be positioned.

According to a different version of the sub-step described above, not shown, the method provides to dispose the transducers 4a along Cartesian coordinates or along a reference system of polar coordinates or a reference system with logarithmic axes and in which a transducer 4a can be positioned at every point of intersection of the coordinates.

According to the disposition of the transducers 4a, a multichannel acquisition card 4b can be provided, interfaceable with a calculator 4c configured to process and emit values as the result of the detection test of the elastic modulus "E" (fig. 1).

Preferably, the method according to the present description also comprises the sub-step of equipping the acquisition means 4 with the multichannel acquisition card 4b, connectable to at least one transducer 4a to acquire the response signal from the sample object 100 following a mechanical stress imparted by the beating element 2.

The experimental method to detect the elastic modulus "E" of objects, samples or semi-worked products of various materials according to the present description advantageously comprises the step of introducing an exciting body 5 having a predetermined mass "m" with a known value.

Advantageously, the detection method according to the inventive concept of the present description, allows to obtain a mass-spring system (shown schematically in fig. 2) supported by the inertial body 3, in which the mass is represented by the exciting body 5 and the spring is represented by the sample object 100. In other words, in this configuration of use which implements the detection method according to the present description and which characterizes the present invention, the sample object 100 is itself part of the detection system. Preferably, in this vibrational model the exciting body 5 and/or the inertial body 3 are made in a form and/or material with an infinite rigidity if compared with a value of rigidity of the sample object 100. By way of detail, by infinite rigidity we do not actually mean an infinite number (as might be understood in mathematical terms) but a substantial indeformability of the material of which the exciting body 5 and/or the inertial body 3 are made.

In an operative configuration to detect the elastic modulus "E" of the sample object 100, the exciting body 5 is interposed between the beating element 2 and the sample object 100 so that the exciting body 5 is disposed in direct contact with the sample object 100 in correspondence with a contact surface 5a having a predetermined and known extension value "S".

The detection method according to the present description can comprise a step that consists of vertically stacking the inertial body 3, the sample object 100 and the exciting body 5. In particular, as shown in fig. 1, the inertial body 3 is disposed below the sample object 100 and the sample object 100 is disposed above the inertial body 3, directly on the support surface 3 a.

In turn the exciting body 5 is disposed above the sample object 100, in direct contact, that is, without any other elements interposed, with the sample object 100, by means of the contact surface 5a.

It is acknowledged that the extension value "S" of the contact surface 5a of the exciting body 5, and hence the fact that the exciting body 5 is put in direct contact with the sample object 100, is important to be able to calculate afterward the tension applied to the sample object 100 following the administration of the impulsive mechanical stress equal to "F", which process will be described in more detail later.

The experimental detection method also comprises the steps of imparting the mechanical stress to the sample object 100, impacting the beating element 2 on the exciting body 5, and subsequently acquiring a response signal from the sample object 100.

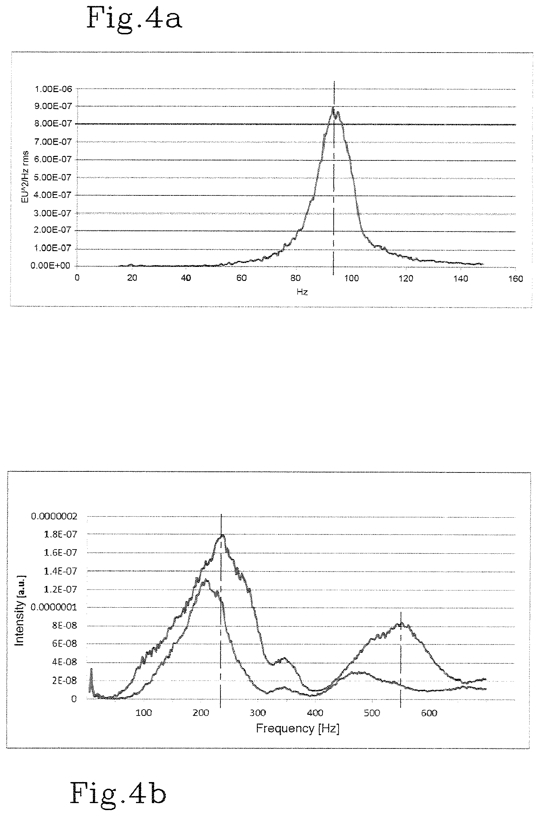

Preferably, said response signal contains at least a resonance frequency of the sample object 100 in an operative configuration to detect the elastic modulus "E" of the sample object 100. By way of non-restrictive example, figs. 4A and 4B show schematically the trend of the response signal obtainable by the present detection method, subjecting sample objects 100 of different types to detection.

The method also comprises the steps of processing a value of elastic modulus "E" of the sample object 100 as a function at least of the extension value "S" of the contact surface 5a and the resonance frequency value of the sample object 100.

By way of detail, the value of the elastic modulus "E" is determined after processing a dynamic rigidity value of the sample object 100 itself, by acquiring the resonance frequency thereof. In other words, acquiring the resonance frequency of the sample object 100 allows to find its dynamic rigidity and subsequently the elastic modulus "E".

Consequently, embodiments of the method described here provide, in substance, to search in said response signal at least its own or natural resonance frequency of the sample object 100 and identify the highest peak of the resonance signal, as shown for example in figs. 4A and 4B. From this maximum peak, by applying mathematical formulas described in detail hereafter, it is possible to find the dynamic rigidity of the sample object 100 and from this, the elastic modulus "E". Therefore, the detection method according to the present description proposes to evaluate a single peak, the highest, of the resonance frequency signal, from which to derive the dynamic rigidity and hence the elastic modulus "E".

We will now describe the detection method in further detail to the steps that it comprises. In particular, the detection method according to the present description comprises the steps of:

- arranging a sample object 100 of the material having a predetermined size and a known mass value;
- providing the acquisition means 4 configured to obtain a response signal from the sample object 100 in an operative detection configuration;
- arranging the sample object 100 in contact with the support surface 3a of the previously prepared inertial body 3, preferably by arranging the sample object 100 above the plurality of transducers 4a described above;
- predisposing the exciting body 5 with predetermined mass "m" and exhibiting the contact surface 5a having a predetermined extension value "S";
- arranging the exciting body 5 in contact with the sample object 100 in correspondence with the contact surface 5a;
- arranging the beating element 2 operatively associated with the detection device 1 and configured to impart a mechanical stress to the sample object 100;
- positioning the sample object 100 in contact with the exciting body 5 and the inertial body 3;
- detecting a value of initial elongation "$X_0$" of the sample object 100 before imparting the mechanical stress to the sample object 100;
- imparting a mechanical stress to the sample object 100 by impacting the beating element 2 on the exciting body 5, and acquiring/registering the response signal by the acquisition means 4;
- processing a resonance frequency value of the sample object 100;
- processing a value of the elastic modulus "E" of the sample object 100 by means of the extension value "S" of the contact surface 5a and determining the resonance frequency value of the sample object 100.

Advantageously, processing the value of the elastic modulus "E" of the sample object 100 using the resonance frequency signal provides to identify the highest peak of the signal, from which to find the dynamic rigidity of the sample object 100 and from this the elastic modulus "E".

The step of detecting a value of initial elongation "$X_0$" of the sample object 100 before imparting the mechanical stress allows to eliminate possible divergences due to settling of the sample object 100 and/or the detection device 1. Generally, in load tests, this procedure is also called pre-loading the test piece and zeroing the plays in the possible detection device.

The step of processing the value of the elastic modulus "E" can be carried out by a detection device 1 configured to process at least the value of force "F", the extension value "S" of the contact surface 5a and the resonance frequency value of the sample object 100 correlated to its own or natural frequency $f_0$ of the sample object 100, which can be derived from the frequency value in correspondence with the maximum peak in the development of the signal, as for example in figs. 4A and 4B. By way of non-restrictive example, the step of processing the value of the elastic modulus "E" can possibly be preceded by the mathematical passes that derive from the following formula:

$$F/S = E * \Delta X/X_0$$

which formula can in turn be traced back to a possible sequence of sub-steps, as follows:

- processing a first value of the ratio of the force value "F" of the mechanical stress with the extension value "S" of the contact surface 5a;
- processing a second ratio value of the value of an elongation variation "ΔX" of the sample object 100 with an initial elongation value "$X_0$" of the sample object 100;

- then processing the value of the elastic modulus "E" of the sample object 100 by calculating a value of the ratio of the first ratio value with the second ratio value.

With reference to the formula reproduced above, the first ratio value is represented by the part F/S which is equivalent to value "s" of the tension exerted on the sample object 100, that is.

$$s = F/S$$

The second ratio value is represented by the ratio $\Delta X/X_0$ which is equivalent to the value "e" of the deformation of the sample object 100 corresponding to the tension exerted on the sample object 100, that is:

$$e = \Delta X/X_0$$

It is possible to bring together the two ratios described above by generalized Hooke's law (preferably valid for isotropic materials) which links the elastic modulus "E" of a body made of a predetermined material and the ratio between the tension s to which it is subjected and its consequent deformation e, that is:

$$s/e = \text{cost} = E$$

The conceptual link between the static type equation shown above and the equation relating to the mass-spring system shown schematically in fig. 2, can be expressed with the following passes.

Starting from the concept of a force "F" acting in a direction to move an object having a mass "m", it is verified that the mass "m" will move with a simple harmonic motion described by the relation:

$$x(t) = x_0 + A\cos(\omega t + \vartheta_0)$$

where $X_0$ is the initial elongation expressed in [m], $A$ is the amplitude of the oscillation and $\omega$ is the pulsation expressed in [rad/s], $t$ is the temporal variable expressed in [s] and $\vartheta_0$ is the initial phase displacement. It should be noted that the pulsation $\omega$ is equal to $2\pi f$ where f is equal to the frequency. In particular, according to the embodiments described here, it is value $f_0$ that is sought, that is, its own or natural frequency of the sample object 100.

Within the context of the detection method according to the present description, the object with the mass "m" of a known value corresponds to the exciting body 5.

Replacing this equation in the second law of dynamics, where:

$$F = m\ddot{x}$$

Hooke's equation for the mass-spring system becomes:

$$F = -k \cdot \Delta x = -k(x_0 - x)$$

We obtain the equation of motion:

$$m\ddot{x} + k(x_0 - x) = 0$$

which in the case of simple harmonic motion allows the solution:

$$x(t) = A\cos(\sqrt{\frac{k}{m}}t + \vartheta_0)$$

the term of which:

$$\omega = \sqrt{\frac{k}{m}} = 2\pi f$$

represents the pulsation of the oscillation correlated to the frequency f. Consequently, the value $f_0$ sought is equal to:

$$f_0 = \frac{1}{2\pi}\sqrt{\frac{k}{m}}$$

from which, having detected experimentally the value of $f_0$, it is possible to calculate the value of the elastic constant $k$, correlated to dynamic rigidity.

Returning to the equation described above with the expression found above, where:

$$F/S = E * \Delta X/X_0$$

It is now possible to replace the terms and obtain:

$$\frac{k \cdot \Delta x}{S} = E \frac{\Delta x}{x_0}$$

Or:

$$\frac{k}{S} = s' = \frac{E}{x_0}$$

where, knowing the elastic constant k as calculated above from $f_0$, the initial elongation "$X_0$" of the sample object 100 and the extension value "S" of the contact surface 5a of the exciting body 5, it is possible to process quickly and simply the value of the elastic modulus "E" of the sample object 100 detected.

The present invention has thus obtained the set purposes.

Advantageously, the experimental method to detect the elastic modulus "E" and/or the structural integrity of a sample object allows to perform a control test of the non-destructive type and directly in the production line in the context of an industrial production department.

Advantageously, the experimental method to detect the elastic modulus "E" and/or the structural integrity of a sample object allows to perform a control test on a sample object in a very limited time and with greatly reduced costs compared with the state of the art.

Advantageously, the method to detect the structural integrity of a sample object according to the present description does not generate special materials which imply risks for the workers and/or which have high disposal costs, unlike in the state of the art.

Advantageously, the experimental method to detect the elastic modulus "E" and/or the structural integrity of a sample object allows to perform an accurate, precise and repeatable detection test. In fact, the experimental detection method can be carried out using a detection device comprising well-defined and calibrated elements with dimensional and structural specifications that allow them to be reproduced exactly, without the possibility of changing the results processed.

It is clear that modifications and/or additions of parts and/or steps may be made to the experimental method to detect the elastic modulus "E" of objects, samples or semi-worked products of various materials as described heretofore, without departing from the field and scope of the present invention.

It is also clear that, although the present invention has been described with reference to some specific examples, a person of skill in the art shall certainly be able to achieve many other equivalent forms of experimental method to detect the elastic modulus "E" of objects, samples or semi-worked products of various materials, having the characteristics as set forth in the claims and hence all coming within the field of protection defined thereby.

In the following claims, the sole purpose of the references in brackets is to facilitate reading: they must not be considered as restrictive factors with regard to the field of protection claimed in the specific claims.

**Claims**

1. Experimental method to detect the elastic modulus (E) of objects, samples, or semi-worked products of various materials, said method comprising the step of:

   - imparting a mechanical stress to said sample object (100) by an impact generated by a beating element (2) with respect to an inertial body (3);

   **characterized in that** it comprises the steps of:

   - introducing an exciting body (5) with a predetermined mass (m) between said beating element (2) and said sample object (100) so that said exciting body (5) is disposed in direct contact with said sample object (100) in correspondence with a contact surface (5a) having a predetermined extension value (S), achieving a mass-spring system supported by said inertial body (3), wherein the mass is represented by the exciting body (5) and the spring is represented by the sample object (100);
   - imparting said mechanical stress to said sample object (100) by impacting said beating element (2) on the exciting body (5) disposed in direct contact on said sample object (100), so that the mechanical stress is transferred directly from said exciting body (5) to said sample object (100);
   - acquiring a response signal corresponding to a resonance frequency value of said sample object (100);
   - processing a value of the elastic modulus (E) of said sample object (100) as a function at least of said extension value (S) of said contact surface (5a) and said resonance frequency value of said sample object (100).

2. Detection method as in claim 1, comprising:

   - arranging a sample object (100) of said material having a predetermined size and a known mass value;
   - providing acquisition means (4) configured to obtain a response signal from said sample object (100) in an operative configuration of detecting the elastic modulus (E) of said sample object (100);
   - arranging said sample object (100) in contact with a support surface (3a) of said inertial body (3), preferably by arranging said sample object (100) in contact with said acquisition means (4) and above said support surface (3a) of said inertial body (3);
- predisposing said exciting body (5) with predetermined mass (m) and exhibiting said contact surface (5a) having a predetermined extension value (S);
- arranging said exciting body (5) in contact with said sample object (100) in correspondence with said contact surface (5a);
- arranging a beating element (2) operatively associated with a detection device (1) and configured to impart a mechanical stress to said sample object (100) in an operative configuration of detecting the elastic modulus (E) of said sample object (100);
- imparting a mechanical stress to said sample object (100) by impacting said beating element (2) on said exciting body (5) and acquiring said response signal through said acquisition means (4);
- processing a resonance frequency value of said sample object (100);
- processing a value of the elastic modulus (E) of said sample object (100) by means of said detection device (1) configured to process said extension value (S) of said contact surface (5a) and said resonance frequency value of said sample object (100).

3. Detection method as in claim 1 or 2, wherein said exciting body (5) and/or the inertial body (3) being made in the form and/or of a material of infinite rigidity with respect to a rigidity of said sample object (100).

4. Detection method as in claim 2, comprising vertically stacking said inertial body (3), said sample object (100) and said exciting body (5), wherein said inertial body (3) is arranged below said sample object (100), said sample object (100) is disposed above said inertial body (3) on said support surface (3a) and said exciting body (5) is disposed above and in contact with said sample object (100) by means of said contact surface (5a).

5. Detection method as in any of the claims 2, 3 or 4, comprising:

   - positioning said sample object (100) in contact with said exciting body (5) and said inertial body (3), preferably arranging said sample object (100) in contact with and disposed between said contact surface (5a) of said exciting body (5) and said support surface (3a) of said inertial body (3);
   - detecting a value of initial elongation $(X_0)$ of said sample object (100) before imparting said mechanical stress to said sample object (100).

6. Detection method as in claim 4, in which the processing of a value of the elastic modulus (E) of said sample object (100) is preceded by the sub-steps:

   - processing a first value of the ratio of a force value (F) of said mechanical stress with said extension value (S) of said contact surface (5a);
   - processing a second ratio value of a value of an elongation variation $(\Delta X)$ of said sample object (100) with an initial elongation value $(X_0)$ of said sample object (100);
   - processing said value of the elastic modulus (E) of said sample object (100) by calculating a value of the ratio of said first ratio value with said second ratio value.

7. Detection method as in one of the preceding claims 5 or 6, comprising the verification of a rigidity value of said inertial body (3) that is much greater than a rigidity value of said sample object (100), preferably predisposing said inertial body (3) in a mineral material selected from marble, granite and/or other minerals having a high density at least in the ratio 3:1 with respect to a density of the constituent material of said sample object (100).

8. Detection method as in any of the claims from 2 to 7, comprising operatively associating said acquisition means (4) with said sample object (100), preferably by associating said acquisition means (4) with said sample object (100) and with said support surface (3a) of said inertial body (3).

9. Detection method as in claim 8, comprising arranging said acquisition means (4) between said sample object (100) and said support surface (3a) of said inertial body (3), preferably by arranging a plurality of transducers (4a) comprised of said acquisition means (4) in accordance with a grid having a predetermined number of rows and columns and wherein at least one transducer (4a) can be positioned at a point of intersection between a row and a column of said grid.

10. Detection method as in claim 8, comprising arranging said acquisition means (4) between said sample object (100) and said support surface (3a) of said inertial body (3), preferably by arranging a plurality of transducers (4a) comprised of said acquisition means (4) according to a reference system with Cartesian coordinates, or a reference system with polar coordinates or a reference system with logarithmic axes and wherein a transducer (4a) can be positioned at least at a point of intersection of said coordinates.

**11.** Detection method as in claim 9 or 10, comprising equipping said acquisition means (4) with a multi-channel acquisition card, connectable to at least one transducer (4a) to acquire said response signal, said response signal preferably containing at least one resonance frequency of said sample object (100) in an operative configuration of detecting the elastic modulus (E) of said sample object (100).

Fig.1

Fig.2

EP 3 141 305 A1

Fig.3

## Fig.4a

## Fig.4b

Europäisches
Patentamt

European
Patent Office

Office européen
des brevets

# EUROPEAN SEARCH REPORT

Application Number

EP 16 18 7706

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | CN 102 636 565 B (UNIV HEHAI)<br>26 March 2014 (2014-03-26)<br>* abstract *<br>* paragraph [0003] - paragraph [0007] *<br>* paragraph [0014] - paragraph [0017] *<br>* paragraph [0029] - paragraph [0031] *<br>* figures 1-4 * | 1,2,4,5,<br>8<br>6,9-11 | INV.<br>B06B1/10<br>G01H1/14<br>G01H13/00<br>G01M7/02<br>G01N29/12<br>G01N3/34 |
| X | US 6 324 915 B1 (POTTS GERALD R [US])<br>4 December 2001 (2001-12-04)<br>* column 2, line 39 - column 4, line 65 *<br>* figure 2 * | 1-4,7,8 | |
| Y | US 2011/030481 A1 (GIUDICEANDREA FEDERICO [IT]) 10 February 2011 (2011-02-10)<br>* paragraph [0010] * | 6 | |
| Y | US 2008/255806 A1 (SAMBUELLI LUIGI [IT] ET AL) 16 October 2008 (2008-10-16)<br>* paragraphs [0027], [0056], [0057] *<br>* figure 2 * | 9-11 | |
| A | US 2003/037619 A1 (HAGE RICHARD TODD [US])<br>27 February 2003 (2003-02-27)<br>* paragraph [0030] - paragraph [0054] * | 3 | TECHNICAL FIELDS SEARCHED (IPC)<br><br>B06B<br>G01H<br>G01M<br>G01N<br>G01L<br>G01B |
| A | US 5 804 707 A (SCARTON HENRY A [US] ET AL) 8 September 1998 (1998-09-08)<br>* column 6, line 8 - line 64 *<br>* column 11, line 42 - column 12, line 62 *<br>* figures 3,8,10 * | 7 | |
| A | US 2005/097964 A1 (FUJII YUSAKU [JP] ET AL) 12 May 2005 (2005-05-12)<br>* paragraph [0019] - paragraph [0027] *<br>* figure 1 * | 1 | |

-/--

The present search report has been drawn up for all claims

| Place of search | Date of completion of the search | Examiner |
|---|---|---|
| The Hague | 19 January 2017 | Breccia, Luca |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

                                      

& : member of the same patent family, corresponding
 document

EPO FORM 1503 03.82 (P04C01)

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2001 337013 A (TOKEN KOEI KK; MORIAI YOSHIO; MATSUMURA YOSHIYASU) 7 December 2001 (2001-12-07) * paragraph [0011] - paragraph [0013] * ----- | 1 | |
| A,D | WO 91/19173 A1 (TECHNOLOGY INTEGRATION & DEV [US]) 12 December 1991 (1991-12-12) * page 11 - page 18 * * figure 1 * ----- | 9-11 | |
| A,D | US 5 533 399 A (GIBSON RONALD F [US] ET AL) 9 July 1996 (1996-07-09) * abstract * * figure 1 * ----- | 1 | |
| A,D | US 4 901 575 A (BOHANNAN WILLIAM L [US] ET AL) 20 February 1990 (1990-02-20) * abstract * * page 1 * ----- | 1 | |

TECHNICAL FIELDS
SEARCHED      (IPC)

The present search report has been drawn up for all claims

| Place of search | Date of completion of the search | Examiner |
|---|---|---|
| The Hague | 19 January 2017 | Breccia, Luca |

EPO FORM 1503 03.82 (P04C01)

## ANNEX TO THE EUROPEAN SEARCH REPORT
## ON EUROPEAN PATENT APPLICATION NO.

EP 16 18 7706

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2017

| Patent document cited in search report | | Publication date | Patent family member(s) | | Publication date |
|---|---|---|---|---|---|
| CN 102636565 | B | 26-03-2014 | NONE | | |
| US 6324915 | B1 | 04-12-2001 | NONE | | |
| US 2011030481 | A1 | 10-02-2011 | AU | 2008362099 A1 | 01-04-2010 |
| | | | CA | 2713944 A1 | 01-04-2010 |
| | | | EP | 2335043 A1 | 22-06-2011 |
| | | | SI | 2335043 T1 | 30-06-2015 |
| | | | US | 2011030481 A1 | 10-02-2011 |
| | | | WO | 2010035066 A1 | 01-04-2010 |
| US 2008255806 | A1 | 16-10-2008 | CA | 2623402 A1 | 10-05-2007 |
| | | | EP | 1943497 A2 | 16-07-2008 |
| | | | US | 2008255806 A1 | 16-10-2008 |
| | | | WO | 2007052239 A2 | 10-05-2007 |
| US 2003037619 | A1 | 27-02-2003 | NONE | | |
| US 5804707 | A | 08-09-1998 | NONE | | |
| US 2005097964 | A1 | 12-05-2005 | DE | 60311818 T2 | 08-11-2007 |
| | | | EP | 1531326 A1 | 18-05-2005 |
| | | | JP | 3944558 B2 | 11-07-2007 |
| | | | JP | 2005147700 A | 09-06-2005 |
| | | | US | 2005097964 A1 | 12-05-2005 |
| JP 2001337013 | A | 07-12-2001 | JP | 3457258 B2 | 14-10-2003 |
| | | | JP | 2001337013 A | 07-12-2001 |
| WO 9119173 | A1 | 12-12-1991 | AU | 8508491 A | 31-12-1991 |
| | | | WO | 9119173 A1 | 12-12-1991 |
| US 5533399 | A | 09-07-1996 | NONE | | |
| US 4901575 | A | 20-02-1990 | CA | 2001926 A1 | 31-05-1990 |
| | | | EP | 0371631 A2 | 06-06-1990 |
| | | | JP | H02212734 A | 23-08-1990 |
| | | | US | 4901575 A | 20-02-1990 |

EPO FORM P0459

For more details about this annex : see Official Journal of the European Patent Office, No. 12/82

**EP 3 141 305 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9119173 A1
- US 5533399 A
- EP 371631 A2
- CN 1026360565 B
- US 2003037619 A
- US 2011030481 A
- US 5804707 A
- US 2008255806 A